# EUROPEAN PATENT APPLICATION

(11) **EP 1 655 650 A1**
(43) Date of publication of application: **10.05.2006**
(21) Application number: 05102415.6
(22) Date of filing: 24.03.2005
(51) Int. Cl.: G06F 1/00

(54) **Information terminal devica having secret function**

(30) Priority: 09.11.2004 JP 2004325444
(71) Applicant: KABUSHIKI KAISHA TOSHIBA, Minato-ku, Tokyo 105-8001 (JP)
(72) Inventor: SAKATA, Tatsuhiko, 105-8001, Tokyo (JP)
(74) Representative: Henkel, Feiler & Hänzel

(57) **Abstract**

Whenever a character is input by a character input device (14), whether a character spring containing the input character is stored in a prediction memory (19) is checked. If a character string containing the input character is stored in the prediction memory (19), whether the stored character or character string is related to entry data set in a secret state is checked. If the stored character or character string is not related to the entry data set in the secret state, output of the stored character or character string is allowed. If the stored character or character string is related, output of the stored character or character string is limited.

## Description

The present invention relates to an information terminal such as a mobile phone, personal digital assistants (PDA), or digital pocketbook and, more particularly, to an information terminal having a function of setting entry data, which is stored in an internal phone book or schedule book of the device, in a secret state and limiting viewing and editing, and a function of limiting display information within a predetermined range.

Generally, an information terminal such as a mobile phone or PDA has a phone book. An outgoing call can be placed by a simple operation by using calling destination information registered in this phone book. Also, some information terminals have a secret function in order to increase the secrecy of calling destination information registered in a phone book. By means of the secret function, each individual calling destination information to be kept secret is set in a secret state by the user, and this calling destination information set in the secret state is kept unviewable or uneditable unless a password is entered. Details of this secret function are described in, e.g., Jpn. Pat. Appln. KOKAI Publication No. 2000-196732.

In contrast, some mobile phones have an input predicting function of increasing the efficiency of, e.g., mail document creation. The input predicting function stores character strings decided to be input in a prediction memory, and, whenever a character is input, reads out a character string containing the input character from the prediction memory, and displays the readout character string. Details of this input predicting function are described in, e.g., Jpn. Pat. Appln. KOKAI Publication No. 2001-325252.

In a terminal device having the input predicting function, however, even when the user inputs the name or the like of a person to be called to be registered in the phone book, this character string is stored in the prediction memory. This poses the following problem. That is, assume that after calling destination information is set in a secret state, a third person inputs the same characters as the beginning of the name of the person to be called. In this case, the name of the person to be called input in the past is read out from the prediction memory and displayed. Consequently, the name of the person to be called set in the secret state is revealed or made presumable.

Also, many recent mobile phones and PDAs have a browser function, and can display Web pages on the Internet. In a terminal device of this type, downloaded page remain cached in memory even after browsing of the Web page is terminated. When the same Web page is accessed again after that, the cached page is displayed.

In a terminal device like this, therefore, if a Web page in the cache memory contains personal information which is set in the secret state in a phone book or schedule book, this personal information set in the secret state can leak to third party when the cached Web page is displayed.

It is an object of the present invention to provide an information terminal which protects data having a relation to entry data set in a secret state from being unconditionally displayed, thereby increasing the secrecy of the entry data.

To achieve the above object, a first aspect of the present invention is an information terminal comprising a data memory which stores entry data, secret control means for limiting access to entry data which is among the entry data stored in the data memory and set in a secret state, a character input device which inputs a character and character string, and a prediction memory which, when a character or character string is decided to be input by the character input device, stores the character or character string decided to be input, wherein whenever a character is input by the character input device, whether a character string containing the input character is stored in the prediction memory is checked. If a character string containing the input character is stored in the prediction memory, whether the stored character or character string is related to the entry data set in the secret state is checked. If the stored character or character string is not related to the entry data set in the secret state, output of the stored character or character siring is allowed.
If the stored character or character string is related, output of the stored character or character string is limited.

To achieve the above object, a second aspect of the present invention is an information terminal comprising a data memory which stores entry data, secret control means for limiting access to entry data which is among the entry data stored in the data memory and set in a secret state, means for acquiring information data, and a cache memory which stores the acquired information data, wherein whether the acquired information data is stored in the cache memory is checked. If the acquired information data is stored in the cache memory, whether the stored information data has a relation to the entry data set in the secret state is checked. If the stored information data has no relation to the entry data set in the secret state, output of the stored data is allowed. If the stored information data has the relation, output of the stored information data is limited.

To achieve the above object, a third aspect of the present invention is an information terminal comprising a data memory which stores entry data, secret control means for limiting access to entry data which is among the entry data stored in the data memory and set in a secret state, a character input device which inputs a character and character string, means for converting, when a character or character string is decided to be input by the character input device, the character or character string decided to be input into a word, and a learning memory which stores the converted word, wherein whenever the character or character string decided to be input is converted into a word, whether the converted word is stored in the learning memory is checked. If the converted word is stored in the learning memory, whether the stored word has a relation to the entry data set in the secret state is checked. If the stored word has no relation to the entry data set in the secret state, output of the stored word is allowed. If the stored word has the relation, output of the stored word is limited.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a first embodiment of an information terminal according to the present invention;
FIG. 2 is a view showing an example of calling destination information stored in a phone book of the device shown in FIG. 1;
FIG. 3 is a view showing an example of a character string stored in a prediction memory of the device shown in FIG. 1;
FIG. 4 is a flowchart showing the control sequence and control contents of a first input prediction permit/reject mode performed by the device shown in FIG. 1;
FIG. 5 is a flowchart showing the control sequence and control contents of a second input prediction permit/reject mode performed by the device shown in FIG. 1;
FIG. 6 is a flowchart showing the control sequence and control contents of a third input prediction permit/reject mode performed by the device shown in FIG. 1;
FIG. 7 is a block diagram showing a second embodiment of the information terminal according to the present invention;
FIG. 8 is a view showing an example of calling destination information stored in a phone book of the device shown in FIG. 7;
FIG. 9 is a flowchart showing the control sequence and control contents of a first cache permit/reject mode performed by the device shown in FIG. 7;
FIG. 10 is a flowchart showing the control sequence and control contents of a second cache permit/reject mode performed by the device shown in FIG. 7;
FIG. 11 is a flowchart showing the control sequence and control contents of a third cache permit/reject mode performed by the device shown in FIG. 7; and
FIG. 12 is a view for explaining the contents of control of another input prediction permit/reject mode performed by the device shown in FIG. 1.

### (First Embodiment)

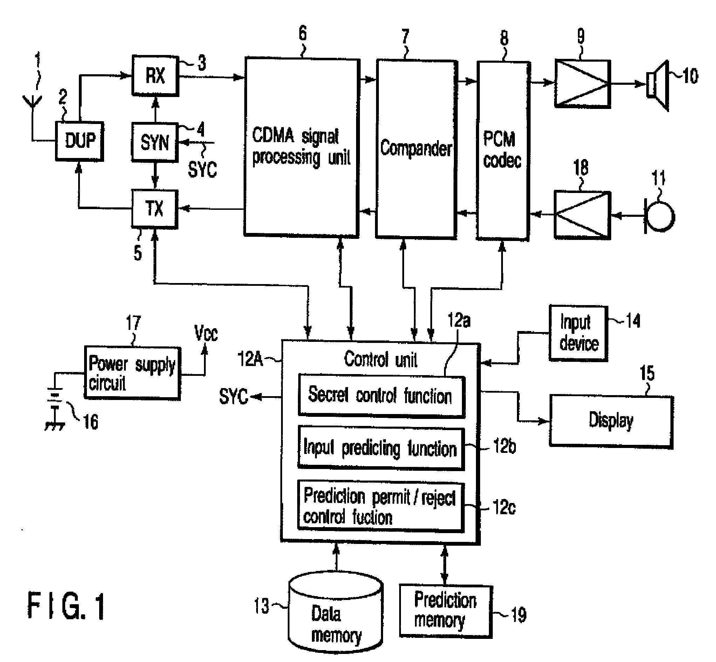

FIG. 1 is a block diagram showing the arrangement of a mobile terminal of a first einbodiment of an information terminal according to the present invention.

Referring to FIG. 1, a radio signal transmitted from a base station (not shown) is received by an antenna 1, and converted into a predetermined transmission format by a duplexer (DUP) 2, receiving circuit (RX) 3, and CDMA signal processing unit 6, thereby forming reception packet data. This reception packet data is input to a compressor/expander (to be referred to as a compander hereinafter) 7.

The compander 7 demultiplexes the output reception packet data from the CDMF signal processing unit 6 for each medium by means of a demultiplexer, and decodes each media data. For example, if audio data is contained in the reception packet data, this audio data is decoded by a speech codec. Also, if video data is contained in the reception packet data, this video data is decoded by a video codec. A digital audio signal obtained by the decoding process is input to a PCM coding unit (to be referred to as a PCM codec hereinafter) 8, and a digital video signal obtained by the decoding process is input a control unit 12A. In addition, if data such as mail or an application program is contained in the reception packet data, this data is input to the control unit 12A.

The output digital audio signal from the compander 7 is output from a loudspeaker 10 via the PCM codec 8 and an amplifier 9.

The output digital video signal from the compander 7 is displayed on a display 15 via a video RAM. The display 15 is formed by a liquid crystal device (LCD). Note that the control unit 12A displays, on the display 15 via the video RAM, not only received video data but also video data of an image sensed by a camera 19.
The data such as mail or an application program is stored in a storage unit 13. The stored data is read from the storage unit 13 and displayed on the display 15 in accordance with a display operation performed on an input device 14. The audio data and video data are also stored in the storage unit 13 if necessary.

A speech signal of a speaker input to a microphone 11 is input to the CDMA signal processing unit 6 via a speech amplifier 18, the PCM codec 8, and the compander 7. Also, an output video signal from the camera 19 is converted into a digital signal by the control unit 12A, and input to the CDMA signal processing unit 6 via the compander 7. The CDMA signal processing unit 6 spreads the spectrum of each input signal. This spread-spectrum signal is converted into a radio signal by a transmitting circuit (TX) 5, supplied to the antenna 1 via the duplexer 2, and transmitted to the base state from the antenna 1.

The input device 14 has dial keys and a plurality of function keys. These function keys include a transmission key, end key, power key, volume control key, and mode designating key. The display 15 displays transmission/reception data described above and data indicating the operation mode of the device. The display 15 also displays phone book data, transmission/reception logs, and the like. In addition, the display 15 has LEDs. The LEDs are used to notify an incoming call and display the charged state of a battery 16.
A power supply circuit 17 generates a predetermined operation power supply voltage Vcc on the basis of an output from the battery 16, and applies this voltage to the individual circuits. Note that the battery 16 is charged by a charging circuit (not shown).

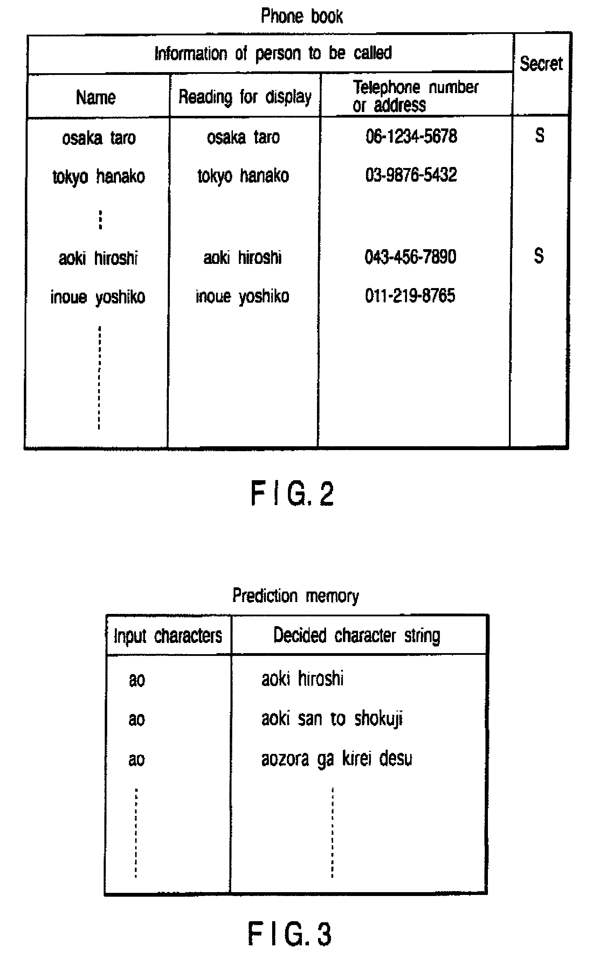

The mobile terminal of the first embodiment includes a data memory 13 and prediction memory 19.
The data memory 13 stores, e.g., a phone book, schedule book, and data folders which store music data, image data, and text data. As shown in FIG. 2, for example, the phone book stores calling destination information as entry data, and secret information indicating whether to Keep each calling destination information secret. The calling destination information is made up of the name of a person to be called, the reading of the name in kana, the telephone number, and the address. The prediction memory 19 is used to implement an input predicting function (to be described later), and stores character strings decided to be input.

The control unit 12A has a microcomputer or the like. As control functions according to the present invention, the control unit 12A has a secret control function 12a, input predicting function 12b, and prediction permit/reject control function 12c. All the functions 12a, 12b, and 12c are implemented by allowing the microcomputer to execute programs.

The secret function 12a sets each calling destination information stored in the phone book in a secret state in accordance with a secret setting operation by the user. As shown in FIG. 2, for example, a secret flag "S" is stored in the calling destination information set in the secret state.

Also, the secret control function 12a requires input of a password from a read request for the calling destination information set in the secret state.
Only when the input password matches a preregistered password, the secret control function 12a reads the corresponding calling destination information from the phone book, and displays the read information on the display 15.

The input predicting function 12b stores, in the prediction memory 19, a character string decided to be input by a character inputting operation on the input device 14. Whenever a character is input on the input device 14 after that, the input predicting function 12b reads out a character string containing the input character from the prediction memory 19, and displays the readout character string on the display 15.

The prediction permit/reject control function 12c invalidates the input predicting function 12b if a character string pertaining to the calling destination information set in the secret state is input by the input device 14. More specifically, the prediction permit/reject control function 12c selectively executes the following three types of input prediction permit/reject modes.
(1) Whenever a character is input on the input device 14, the prediction permit/reject control function 12c checks whether calling destination information containing the input character spring is present in the calling destination information set in the secret state. If the corresponding calling destination information is present, the prediction permit/reject control function 12c protects the character string stored in the prediction memory 19 from being displayed.
(2) When a character string is decided to be input on the input device 14, the prediction permit/reject control function 12c checks whether calling destination information containing the character string decided to be input is present in the calling destination information set in the secret state. If the corresponding calling destination information is present, the prediction permit/reject control function 12c inhibits the character string decided to be input from being stored in the prediction memory 19.
(3) When calling destination information stored in the phone book is newly set in the secret state, the prediction permit/reject control function 12c searches the prediction memory 19 for character strings contained in this calling destination information newly set in the secret state, and deletes the found character strings from the prediction memory 19.

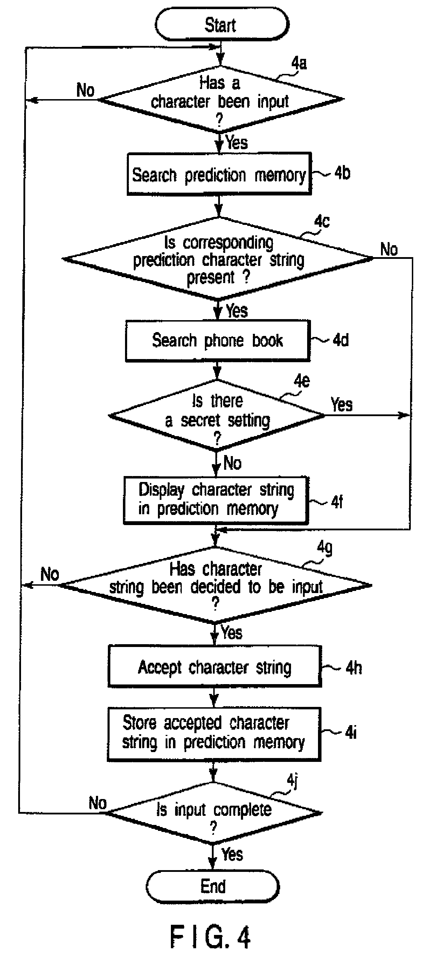

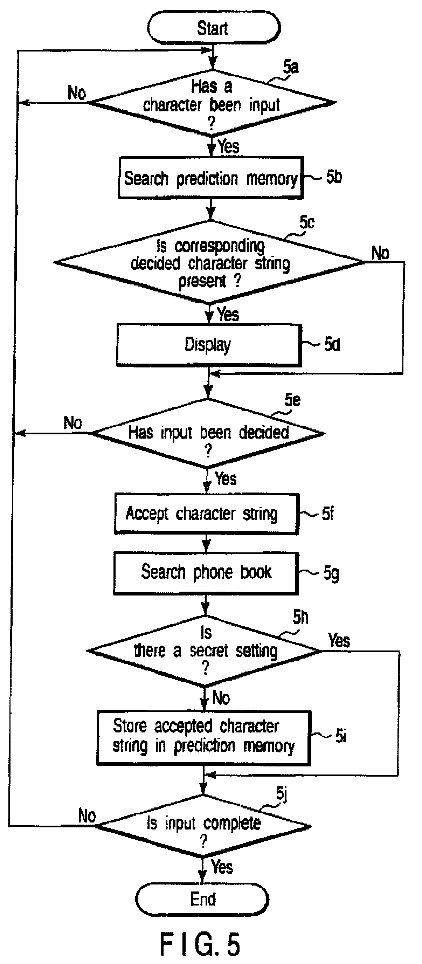

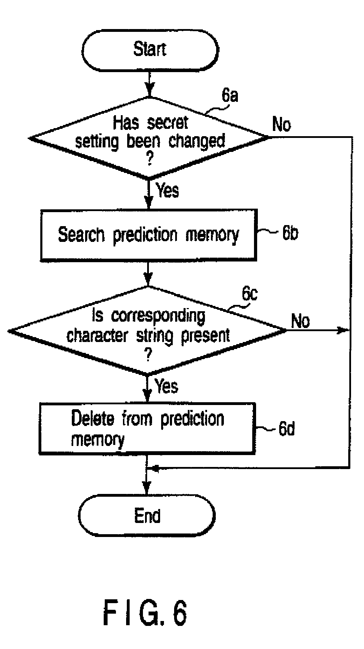

The operation of the mobile terminal having the above arrangement will be explained below. FIGS. 4 to 6 are flowcharts showing the control sequences and control contents of the control unit 12A.
(1) First Input Prediction Permit/Reject Mode
   Assume, for example, that a user is writing the text of a mail message. In this state, the control unit 12A monitors inputting of characters in step 4a as shown in FIG. 4. Whenever a character is input, the control unit 12A advances to step 4b and searches the prediction memory 19. In step 4c, the control unit 12A checks the presence/absence of a character string containing the input character on the basis of the search result. If no corresponding character string is stored in the prediction memory 19, the control unit 12A advances to step 4g and monitors an operation of deciding the input character or character string. If no such deciding operation is performed, the control unit 12A returns to step 4a and waits for input of the next character. If the input character string deciding operation is performed, the control unit 12A advances to step 4h and adds, to the mail document, the character or character string decided to be input. In addition, in step 4i, the control unit 12A stores the added character or character string in the prediction memory 19. Finally, in step 4j, the control unit 12A monitors an input terminating operation. If the input terminating operation is detected in this state, the control unit 12A terminates the processing. If the input operation has not been terminated yet, the control unit 12A returns to step 4a and waits for input of the next character.
   On the other hand, if in step 4c the corresponding character string is found in the prediction memory 19, the control unit 12A advances to step 4d and searches the phone book. In step 4e, the control unit 12A checks, on the basis of the search result, whether calling destination information containing the input character string is present in the calling destination information set in the secret state. If no calling destination information containing the input character string is present, the control unit 12A advances to step 4f, reads the corresponding character string from the prediction memory 19, and displays the read character string on the display 15. If the displayed character string is the character string to be input, the operator performs a deciding operation. This allows easy character input using the input predicting operation.
   If calling destination information containing the input character string is present in the calling destination information set in the secret state, the control unit 12A skips step 4f and advances to step 4g to monitor an input deciding operation. Therefore, the character string stored in the prediction memory 19 is not displayed. This prevents the inconvenience that the name of the person to be called set in the secret state is revealed or made presumable.
   For example, assume that calling destination information concerning "aoki hiroshi" is set in the secret state as shown in FIG. 2, and that "aoki hiroshi", "aoki san to shokuji"(meaning "dining out with Mr. Aoki") and "aozora ga kirei desu"(meaning "the blue sky is beautiful"), and the like input in the past are stored in the prediction memory 19 so as to correspond to "ao" as shown in FIG. 3. In this case, the mobile terminal of this embodiment does not display these character strings corresponding to "ao" stored the prediction memory 19. This maintains the secrecy of "aoki hiroshi".
   In the conventional device, on the other hand, when "ao" is input, the character strings such as "aoki hiroshi", "aoki san to shokuji" (meaning "dining out with Mr. Aoki") and "aozora ga kirei desu" (meaning "the blue sky is beautiful") corresponding to or related to calling destination information set in the secret state are read out from the prediction memory 19 and displayed. Therefore, the name "aoki hiroshi" and the past action recording "aoki san to shokuji" (meaning "dining out with Mr. Aoki") set in the secret state are revealed, and this is very unpreferable.
(2) Second Input Prediction Permit/Reject Mode
   While the user is writing the text of mail, for example, the control unit 12A monitors inputting of characters in step 5a, as shown in FIG. 5. Whenever a character is input, the control unit 12A advances to step 5b and searches the prediction memory 19. In step 5c, the control unit 12A checks the presence/absence of a character string containing the input character on the basis of the search result. If no corresponding character string is stored in the prediction memory 19, the control unit 12A advances to step 5e and monitors an operation of deciding the input character or character string. If no such deciding operation is performed, the control unit 12A returns to step 5a and waits for input of the next character. If the deciding operation is performed, the control unit 12A advances to step 5f and adds, to the mail document, the character or character string decided to be input.
   On the other hand, if a character string containing the input character is stored in the prediction memory 19, the control unit 12A advances to step 5d, reads the corresponding character string from the prediction memory 19, and displays the read character string on the display 15. In step 5e, the control unit 12A monitors an input character string deciding operation. If no deciding operation is performed, the control unit 12A returns to step 5a and waits for input of the next character. If the deciding operation is performed, the control unit 12A advances to step 5f and adds, to the mail document, the character or character string decided to be input.
   That is, in steps 5a to 5f described above, a character input process using the normal input predicting function is performed.
   If the character string input deciding operation is performed, the control unit 12A advances to step 5g and searches the phone book. In step 5h, the control unit 12A checks whether calling destination information containing the character string decided to be input is present in the calling destination information set in the secret state. If no calling destination information containing the character string decided to be input is present in the calling destination information set in the secret state, the control unit 12A advances to step 5i and stores the character string decided to be input in the prediction memory 19. In step 5j, the control unit 12A monitors an input terminating operation. If the input terminating operation is detected in this state, the control unit 12A terminates the processing. If the input operation nas not been terminated yet, the control unit 12A returns to step 5a and waits for input of the next character.
   On the other hand, if calling destination information containing the character string decided to be input is present in the calling destination information set in the secret state, the control unit 12A advances to step 5j without storing the character string decided to be input in the prediction memory 19. Accordingly, even if a character contained in the character string decided to be input is input by a character input operation by any third party after that, the inconvenience that this character string containing the input character is read from the prediction memory 19 and displayed is avoided.
(3) Third Input Prediction Permit/Reject Mode
   In the standby state, the control unit 12A monitors a secret setting changing operation for the phone book in step 6a as shown in FIG. 6. Assume that, in this state, the user newly sets a desired one of the calling destination information stored in the phone book in the secret state.

In this state, the control unit 12A searches the prediction memory 19 in step 6b. In step 6c, the control unit 12A checks whether a character string contained in the calling destination information newly set in the secret state is stored in the prediction memory 19. If the corresponding character string is stored, the control unit 12A advances to step 6d and deletes this character string from the prediction memory 19.

Accordingly, even if a character contained in the character string which forms part of the calling destination information set in the secret state is input during a character input operation for, e.g., mail formation after that, this character string containing the input character is neither read from the prediction memory 19 nor displayed. This avoids the inconvenience that the name of a person to be called set in the secret state is revealed or made presumable.

In the first embodiment as described above, in the character input mode using the input predicting function 12b, whenever a character is input on the input device 14, whether calling destination information containing the input character string is present in the calling destination information set in the secret state is checked. In accordance with the check result, the following three types of processes are selectively executed.
(1) If the corresponding calling destination information is present, the character string stored in the prediction memory 19 is projected from being displayed.
(2) When a character string is decided to be input, whether calling destination information containing the character string decided to be input is present in the calling destination information set in the secret state is checked. If the corresponding calling destination information is present, storage of the character string decided to be input into the prediction memory 19 is inhibited.
(3) When calling destination information stored in the phone book is newly set in the secret state, the prediction memory 19 is searched for a character string contained in this calling destination information newly set in the secret state. Then, the found character string is deleted from the prediction memory 19.

Accordingly, even when calling destination information containing an input character string is present in the calling destination information set in the secret state, no character string stored in the prediction memory 19 is displayed. If calling destination information containing a character string decided to be input is present in the calling destination information set in the secret state, this character string decided to be input is not stored in the prediction memory 19. In addition, if a character string contained in calling destination information newly set in the secret state is stored in the prediction memory 19, this character string is deleted from the prediction memory 19.

Even when, therefore, a character contained in a character string which forms part of calling destination information set in the secret state is input, this character string containing the input character is neither read from the prediction memory 19 and nor displayed. This avoids the inconvenience that the name of a person to be called set in the secret state is revealed or made presumable.

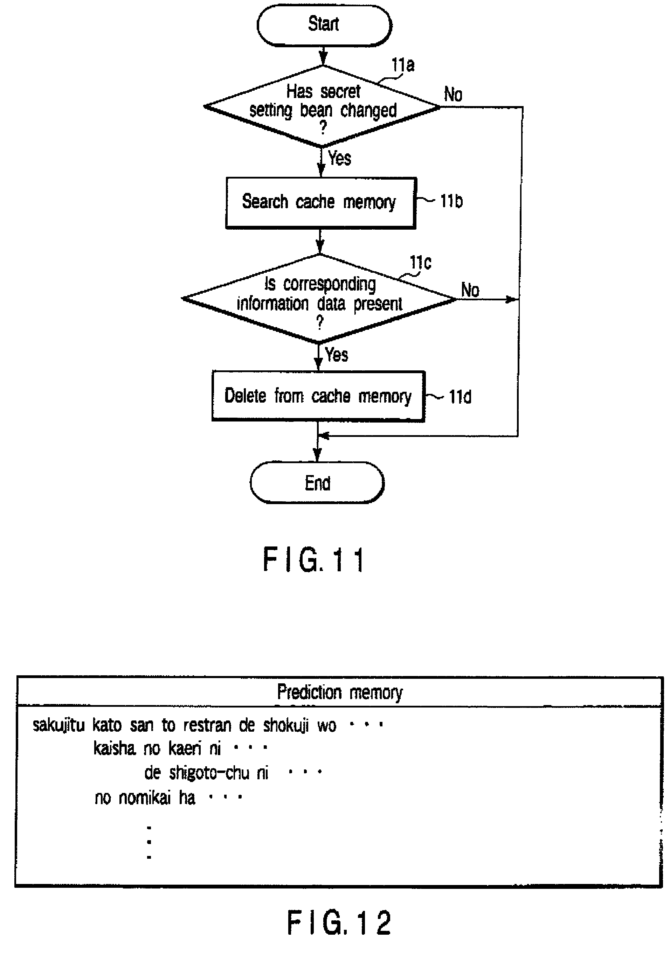

Note that, as shown in FIG. 12, it is also possible to record character strings (documents) input in the past into the input prediction memory 19, and, when a character or character string input from the input device 14 is decided, to display these characters or character strings input in the past, following the decided character or character string, as input prediction candidates on the display 15.

For example, when a character string "sakujitsu" (meaning "yesterday") is decided to be input, the input predicting function 12b of the control unit 12A searches the information recorded in the input prediction memory 19 for "sakujitsu". If "sakujitsu" is recorded, "kato san" (meaning "Mr. Kato"), "kaisha" (meaning "company"), and "no" (meaning "of") are read out as characters or character strings following "sakujitsu", and displayed as input prediction candidates on the display 15.

If none of characters and character strings displayed on the display 15 is to be input, desired characters or character strings are input by using the input device 14. When the input characters or character strings are decided, the control unit 12A searches the phone bock. If the decided characters or character strings are present in the calling destination information set in the secret state, the control unit 12A performs control such that characters or character strings to be input after that and containing the decided characters or character strings are not recorded in the prediction memory 19.

As described above, control is performed such that a document containing characters or character strings contained in the calling destination information set in the secret state is not recorded in the prediction memory 19. This makes it possible to prevent these characters or character strings from becoming input prediction candidates during an input process after that.

### (Second Embodiment)

A second embodiment of the present invention is a mobile terminal having a function of storing information data downloaded from, e.g., a Web page into a cache memory, and, when the same Web page is accessed after that, reading the stored information data from the cache memory and displaying the read data. In this mobile terminal, information data having a relation to calling destination information set in a secret state in a phone book is neither read from the cache memory nor displayed.

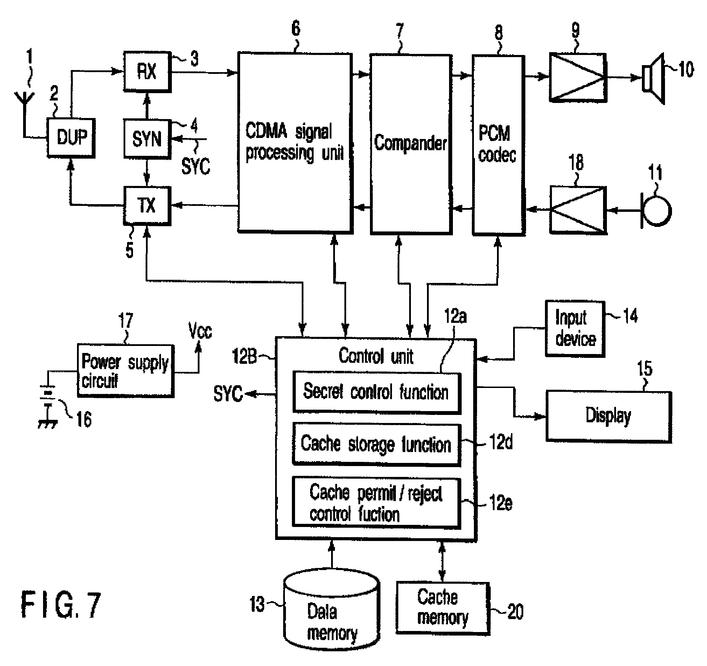

FIG. 7 is a block diagram showing the arrangement of a mobile terminal according to the second embodiment of the present invention. Note that the same reference numerals as in FIG. 1 denote the same parts in FIG. 7, and a detailed explanation thereof will be omitted.

The mobile terminal of this embodiment includes a cache memory 20 in addition to a data memory 13 which stores a phone book and the like. The cache memory 20 stores information data downloaded from, e.g., a Web site and displayed on a display 15.

A control unit 12B has a secret control function 12a, cache storage function 12d, and cache permit/reject control function 12e, as control functions according to the present invention. The functions 12a, 12d, and 12e are implemented by allowing a microcomputer to execute programs.

The cache storage function 12d stores information data downloaded from, e.g., a Web site and displayed into the cache memory 20. When the same Web page is accessed after that, the cache storage function 12d reads the information data from the cache memory 20 and displays the read data.

The cache permit/reject control function 12e invalidates the caching process by the cache storage function 12d if information data having a relation to the calling destination information set in the secret state in the phone book is acquired. More specifically, the cache permit/reject control function 12e selectively executes the following three types of cache permit/reject modes.
(1) When a display request for information data stored in the cache memory 20 is generated, whether calling destination information having a relation to the information data stored in the cache memory is present in the calling destination information set in the secret state is checked. If it is determined that calling destination information having the relation is present, this information data stored in the cache memory 20 is not displayed.
(2) When information data to be cached is acquired, whether calling destination information having a relation to the acquired information data is present in the calling destination information set in the secret state is checked. If it is determined that calling destination information having the relation is present, storage of the acquired information data into the cache memory 20 is inhibited.
(3) When calling destination information stored in the phone book is newly set in the secret state, the cache memory 20 is searched for information data having a relation to this calling destination information newly set in the secret state. The found information data is deleted from the cache memory 20.

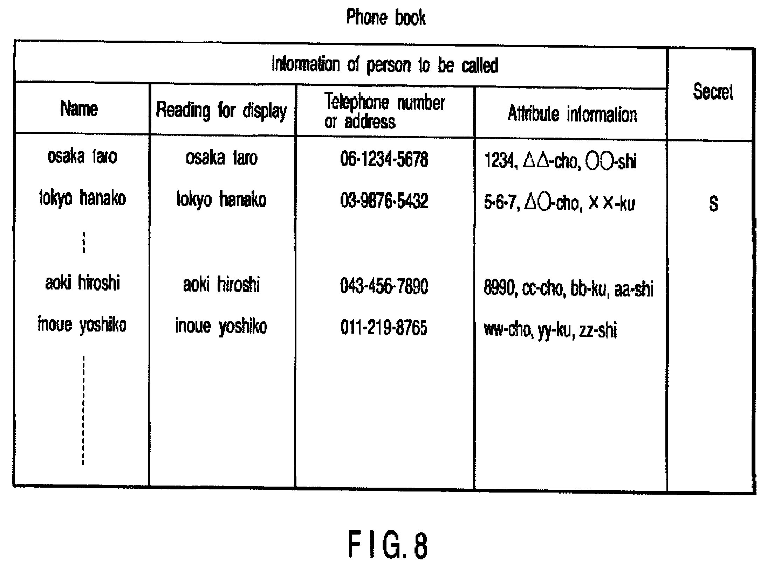

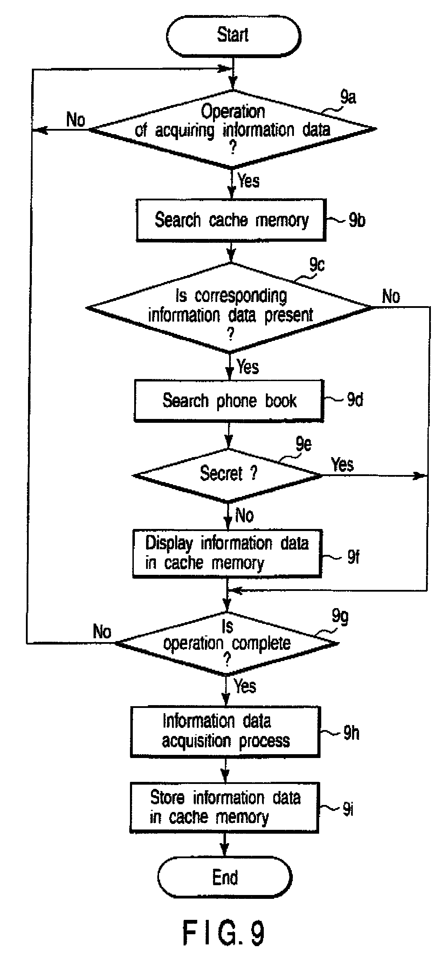

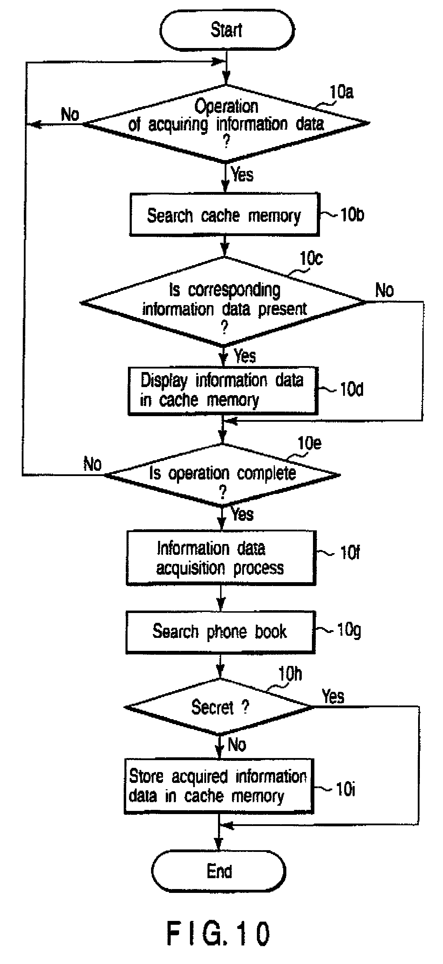

The operation of the mobile terminal having the above arrangement will be explained below. FIGS. 9 to 11 are flowcharts showing the control sequences and control contents of the control unit 12B.
(1) First Cache Permit/Reject Mode
   Assume that the user activates the browser and performs an operation of acquiring information data from a desired Web page. In this case, as shown in FIG. 9, the control unit 12B advances from step 9a to step 9b and searches the cache memory 20. In step 9c, the control unit 12B checks, on the basis of the search result, whether information data acquired in the past from the same Web page is present.
   If no corresponding information data is found in the cache memory 20, the control unit 12B advances to step 9g and monitors termination of the above acquiring operation. If the acquiring operation is not terminated, the control unit 12B returns to step 9a and waits for input of the acquiring operation. If the acquiring operation is terminated, the control unit 12B advances to step 9h, acquires information data from the Web page, and displays the acquired data on the display 15. In step 9i, the control unit 12B stores the information data in the cache memory 20.
   On the other hand, if in step 9c the corresponding information data is found in the cache memory 20, the control unit 12B advances to step 9d and searches the phone book. In step 9e, the control unit 12B checks, on the basis of the search result, whether calling destination information having a relation to the information data stored in the cache is present in the calling destination information set in the secret state. If no calling destination information having a relation to the information data stored in the cache is present, the control unit 12B advances to step 9f, reads the information data from the cache memory 20, and displays the read data on the display 15. On the basis of the displayed information data, therefore, the user can relatively simply access the Web page after that.
   If calling destination information having a relation to the information data stored in the cache is present in the calling destination information set in the secret state, the control unit 12B skips step 9f and advances to step 9g. Accordingly, the informally data stored in the cache memory 20 is not displayed, and this avoids the inconvenience that this calling destination information set in the secret state is revealed or made presumable.
   For example, assume, as shown in FIG. 8, that calling destination information pertaining to "Tokyo hanako" is set in the secret state, and map data including the address of "Tokyo hanako" is stored in the cache memory 20. In this case, even when an operation of acquiring map data from, e.g., a Web site is performed, the mobile phone of this embodiment does not display the map data stored in the cache memory 20 and including the address of "Tokyo hanako". Therefore, even if third party borrows this mobile phone and performs an operation of acquiring map data, the map data including the address of "Tokyo hanako" set in the secret state is not displayed. This maintains the secrecy of the calling destination information concerning "Tokyo hanako".
   Similarly, if information data containing the name or telephone number of a person to be called set in the secret state is stored in the cache memory 20, this information data is not displayed. This avoids the inconvenience that the name or telephone number of a person to be called set in the secret state is known to a third party.
(2) Second Cache Permit/Reject Mode
   When the user performs an operation of acquiring desired information data from a desired Web page, the control unit 12B advances from step 10a to step 10b as shown in FIG. 10, and searches the cache memory 20.
   In step 10c, the control unit 12B checks, on the basis of the search result, whether information acquired in the past from the same Web page is stored. If no corresponding information data is stored in the cache memory 20, the control unit 12B advances to step 10e and monitors termination of the acquiring operation. If the acquiring operation is terminated, the control unit 12B advances to step 10f and executes a process of downloading the information data from the Web page. If the acquiring operation is not terminated, the control unit 12B returns to step 10a.
   On the other hand, if information data acquired in the past from the same Web page is stored in the cache memory 20, the control unit 12B advances to step 10d, reads the information data from tne cache memory 20, and displays the read data on the display 15. In step 10e, the control unit 12B monitors termination of the acquiring operation. If the acquiring operation is terminated, the control unit 12B advances to step 10f and executes the process of downloading the information data from the Web page. If the acquiring operation is not terminated, the control unit 12B returns to step 10a. That is, in steps 10a to 10f described above, a Web page access operation using the cache storage function is performed.
   If the acquiring operation is terminated and the information data is downloaded from the Web page, the control unit 12B advances to step 10g and searches the phone book. In step 10h, the control unit 12B checks, on the basis of the search result, whether information having a relation to the acquired information data is present in the calling destination information set in the secret state. If no calling destination information having a relation to the acquired information data is present in the calling destination information set in the secret state, the control unit 12B advances to step 10i and stores the acquired information data in the cache memory 20.
   If calling destination information having a relation to the acquired information data is present in the calling destination information set in the secret state, the control unit 12B does not store the acquired information data in the cache memory 20. Therefore, even when third party accesses a Web page which is accessed by the user in the past, it is possible to avoid the inconvenience that information data acquired in the past from that Web page is read from the cache memory 20 and displayed.
(3) Third Cache Permit/Reject Mode
   In the standby state, the control unit 12B monitors a secret setting changing operation for the phone book in step 11a as shown in FIG. 11. Assume that, in this state, the user newly sets a desired one of the calling destination information stored in the phone book in the secret state.

In this state, the control unit 12B searches the cache memory 20 in step 11b. In step 11c, the control unit 12B checks whether information data having a relation to the calling destination information newly set in the secret state is stored in the cache memory 20. If the corresponding information data is stored, the control unit 12B advances to step 11d and deletes this information data from the cache memory 20.

Accordingly, even when, for example, a third party borrows the mobile phone from the user and accesses a certain Web page which is accessed by the user in the past, information data acquired in the past from that Web page is neither read from the cache memory 20 nor displayed. This reliably avoids the inconvenience that the name of a person to be called set in the secret state is revealed or made presumable.

In the second embodiment as described above, in the Web access mode using the cache storage function 12d, whether calling destination information having a relation to information data stored in the cache memory 20 is present in the calling destination information set in the secret state is checked. In accordance with the check result, the following three types of processes are selectively executed.
(1) If calling destination information having a relation to the stored information data is present, the information data stored in the cache memory 20 is protected from being displayed.
(2) When information data to be cached is acquired, whether calling destination information having a relation to the acquired information data is present in the calling destination information set in the secret state is checked. If calling destination information having the relation is present, storage of the information data into the cache memory 20 is inhibited.
(3) When calling destination information stored in the phone book is newly set in the secret state, the cache memory 20 is searched for information data having a relation to this calling destination information newly set in the secret state. Then, the found information data is deleted from the cache memory 20.

Accordingly, even when calling destination information having a relation to information data stored in the cache memory 20 is present in the calling destination information set in the secret state, this information data stored in the cache memory 20 is not displayed. Also, if calling destination information having a relation to acquired information data is present in the calling destination information set in the secret state, this acquired information data is not stored in the cache memory 20. In addition, if information data having a relation to calling destination information newly set in the secret state is stored in the cache memory 20, this information data is deleted from the cache memory 20.

Consequently, information data containing the name or telephone number of a person to be called set in the secret state or map data representing the address of this person to be called is neither read from the cache memory 20 nor displayed. This avoids the inconvenients that the name or telephone number of a person to be called set in the secret state is revealed or made presumable.

### (Other Embodiments)

Note that the present invention is not limited to the above embodiments. For example, the present invention is also applicable to kana-kanji converting functions. That is, general kana-kanji converting functions have a learning function. As an example, the learning function stores, in a learning memory, each input kana reading and a converted kanji character in relation to each other. When the same kana reading is input after that, the stored kanji character is preferentially read out and displayed. Therefore, if a kanji character contained in calling destination information set in the secret state is stored in the learning memory and a third party inputs the same kana reading, this kanji character is preferentially displayed. As a consequence, the name of a person to be called set in the secret state may be revealed or made presumable.

To prevent this, the kanji character contained in calling destination information set in the secret state is not read from the learning memory and is not displayed, or is not stored in the learning memory.
In addition, the stored kanji character is deleted from the learning memory. This prevents the inconvenience that when a document is to be formed by using the kana-kanji converting function, a kanji character contained in calling destination information set in the secret state is read from the learning memory and displayed. Consequently, it is possible to maintain the secrecy of the name or the like of the calling destination information set in the secret state.

Also, each embodiment is explained by taking a mobile terminal such as a mobile phone or PDA as an example. However, the present invention is similarly applicable to other information terminals such as a personal computer and digital pocketbook. Furthermore, each embodiment is explained by taxing, as an example, calling destination information stored in a phane book as entry data set in the secret state. However, the present invention is also applicable to, e.g., schedule information stored in a schedule book, Web site names and their URLs stored in a "My Favorites" folder, music and video files stored in data folders, and application programs.

In addition, the present invention can be variously modified when practiced in respect of, e.g., the arrangement of the information terminal, the control sequences and control contents of the input prediction permit/reject control function and cache storage permit/reject control function, and the types of entry data.

In conclusion, the present invention is not directly limited to the above embodiments, but can be implemented, when practiced, by modifying the constituent elements without departing from the spirit and scope of the invention. Also, various inventions can be formed by appropriately combining a plurality of constituent elements disclosed in the embodiments. For example, some of the constituent elements disclosed in the embodiments may be deleted. Furthermore, constituent elements from different embodiments may be appropriately combined.

## Claims

1. An information terminal **characterized by** comprising:
a data memory (13) configured to store entry data;
secret control means (12a) for limiting access to entry data which is among the entry data stored in the data memory (13) and set in a secret state;
a character input device (14) configured to input a character and character string;
a prediction memory (19) configured to store the character or character string decided to be input, if a character or character string is decided to be input by the character input device (14);
means (12b) for determining whether a character string containing the input character is stored in the prediction memory (19), whenever a character is input by the character input device (14);
means (12c) for determining whether the stored character or character string has a relation to the entry data set in the secret state, if a character string containing the input character is stored in the prediction memory (19); and
input prediction control means (12c) for allowing output of the stored character or character string if the stored character or character string has no relation to the entry data set in the secret state, and limiting output of the stored character or character string if the stored character or character string has the relation.

2. The terminal according to claim 1, **characterized in that** the input prediction control means (12c) displays the stored character or character string if the stored character or character string has no relation to the entry data set in the secret state, and inhibits the stored character or character string from being displayed if the stored character or character string has the relation.

3. The terminal according to claim 1, **characterized by** further comprising:
means (12c) for determining whether entry data having a relation to the character or character string decided to be input is present in the entry data set in the secret state, if a character or character string is decided to be input by the character input device (14); and
means (12c) for limiting storage, into the prediction memory (19), of the character or character string decided to be input, if it is determined that entry data having the relation is present.

4. The terminal according to claim 1, **characterized by** further comprising:
means (12c) for searching, when entry data stored in the data memory is newly set in the secret state, the prediction memory for a character or character string having a relation to the entry data newly set in the secret state; and
means (12c) for deleting the found character or character string from the prediction memory (19).

5. The terminal according to claim 1, **characterized by** further comprising:
means (12c) for searching the prediction memory (19) for a character or character string having a relation to the entry data newly set in the secret state, if entry data stored in the data memory (13) is newly set in the secret state; and
means (12c) for setting the found character or character string in a read inhibit state.

6. An information terminal **characterized by** comprising:
a data memory (13) configured to store entry data;
secret control means (12a) for limiting access to entry data which is among the entry data stored in the data memory (13) and set in a secret state;
means (1 to 7) for acquiring information data;
a cache memory (20) which stores the acquired information data;
means (12e) for determining whether the acquired information data is stored in the cache memory (20):
means (12e) for determining whether the stored information data has a relation to the entry data set in the secret state, if the acquired information data is stored in the cache memory (20); and
cache control means (12e) for allowing output of the stored information data if the stored information data has no relation to the entry data set in the secret state, and limiting output of the stored information data if the stored information data has the relation.

7. The terminal according to claim 6, **characterized in that** the cache control means (12e) displays the stored information data if the stored information data has no relation to the entry data set in the secret state, and inhibits the stored information data from being displayed if the stored information data has the relation.

8. The terminal according to claim 6, **characterized by** further comprising:
means (12e) for determining whether entry data having a relation to the acquired information data is present in the entry data set in the secret state, if the information data is acquired; and
means (12e) for limiting storage of the acquired information data into the cache memory (20), if it is determined that entry data having the relation is present.

9. The terminal according to claim 6, **characterized by** further comprising:
means (12e) for searching the cache memory (20) for information data having a relation to the entry data newly set in the secret state, if entry data stored in the data memory (13) is newly set in the secret state; and
means (12e) for deleting the found information data from the cache memory (20).

10. The terminal according to claim 6, **characterized by** further comprising:
means (12e) for searching the cache memory (20) for information data having a relation to the entry data newly set in the secret state, if entry data stored in the data memory (13) is newly set in the secret state; and
means (12e) for setting the found information data in a read inhibit state.

11. An information terminal **characterized by** comprising:
a data memory (13) configured to store entry data;
secret control means (12a) for limiting access to entry data which is among the entry data stored in the data memory (13) and set in a secret state;
a character input device (14) configured to input a character or character string;
means for converting the character or character string decided to be input into a word, if a character or character string is decided to be input by the character input device (14);
a learning memory configured to store the converted word;
means for determining whether the converted word is stored in the learning memory, whenever the character or character string decided to be input is converted into a word;
means for determining whether the stored word has a relation to the entry data set in the secret state, if the converted word is stored in the learning memory; and
learning control means for allowing output of the stored word if the stored word has no relation to the entry data set in the secret state, and limiting output of the stored word if the stored word has the relation.

12. The terminal according to claim 11, **characterized in that** the learning control means displays the stored word if the stored word has no relation to the entry data set in the secret state, and inhibits the stored word from being displayed if the stored word has the relation.

13. The terminal according to claim 11, **characterized by** further comprising:
means for determining whether entry data having a relation to the converted word is present in the entry data set in the secret state, if the character or character string decided to be input is converted into a word; and
means for limiting storage of the converted word into the learning memory, if it is determined that entry data having the relation is present.

14. The terminal according to claim 11, **characterized by** further comprising:
means for searching the learning memory for a word having a relation to the entry data newly set in the secret state, if entry data stored in the data memory (13) is newly set in the secret state; and
means for deleting the found word from tne learning memory.

15. The terminal according to claim 11, **characterized by** further comprising:
means for searching the learning memory for a wore having a relation to the entry data newly set in the secret state, if entry data stored in the data memory (13) is newly set in the secret state; and
means for setting the found word in a read inhibit state.
